Europäisches Patentamt

European Patent Office    (11) Publication number: **0 090 514**

Office européen des brevets    **A1**

(12) **EUROPEAN PATENT APPLICATION**

(21) Application number: 83301207.3

(51) Int. Cl.³: **G 05 D 23/24**, G 05 F 1/46

(22) Date of filing: 07.03.83

(30) Priority: 15.03.82 US 357983

(71) Applicant: **ROTRON INCORPORATED, Hasbrouck Lane, Woodstock, NY 12498 (US)**

(43) Date of publication of application: 05.10.83 Bulletin 83/40

(72) Inventor: **Brown, Fred A., 414 Zena Road, Woodstock New York, 12498 (US)**

(84) Designated Contracting States: **DE FR GB IT NL**

(74) Representative: **Ellis, Edward Lovell et al, MEWBURN ELLIS & CO. 2/3 Cursitor Street, London EC4A 1BQ (GB)**

(54) A temperature tracking D.C. motor speed controlled fan.

(57) A temperature tracking D.C. motor speed controlled fan (15) employs a temperature sensitive circuit element (35) to control the output voltage of a voltage regulator (24) which is applied as the D.C. input to the fan motor circuit (18). Typically, the voltage regulator (24) is an integrated circuit voltage regulator having an adjustable output voltage, variable as a function of circuit elements connected thereto. In each of several circuit arrangements, a thermistor (35) senses temperature to increase voltage and consequently fan speed with rising temperatures. In a preferred embodiment the thermistor is used to control the base drive of a transistor (Q₁) connected to the regulator. A Zener diode (D₂) connected in series with the transistor (Q₁) can provide a minimum output voltage from the voltage regulator, keeping the D.C. motor (10) of the fan turning at a low, quiet speed. The voltage applied to the thermistor (35) can be derived partly or wholly from the input to the regulator, reducing or eliminating the negative feedback effect that comes from deriving the thermistor voltage from the controlled output. A voltage stabilization circuit including a Zener diode (D₃) at the input to the voltage regulator can provide a stabilized voltage to the thermistor.

ACTORUM AG

A TEMPERATURE TRACKING D.C. MOTOR

SPEED CONTROLLED FAN

The present invention relates to the combination of a D.C. motor, fan, and temperature tracking D.C. control circuit and more particularly to the combination motor, fan and control circuit wherein the control circuit is temperature sensitive to vary motor speed from either a minimum speed or an "off" condition at an acceptable ambient temperature through a range of increasing speeds with increasing temperature.

The use of D.C. fans, i.e. fans driven by D.C. motors is becoming widespread. These are used for cooling in electronics, office equipment, communication systems and many other applications. Some D.C. fans allow for large voltage-dependent speed variations, making them very popular where air moving noise or power consumption considerations are important. These can be operated at low speed ordinarily for low noise and low air movement and at higher speeds when necessary, but of course with increased noise and power consumption.

As for motor control, transistor circuits have been used to control an A.C. motor based on temperature, turning the motor either on or off. To this end a thermistor has been suggested for varying the bias of transistors, thereby to control a solenoid operated switch connected with the A.C. motor. A similar arrangement has been suggested to control the speed of a fan motor by switching an input voltage among several terminals of a motor, each of which terminals corresponds to a particular motor speed. Although several speeds are provided, there is no continuous adjustment from zero or low speed through intermediate speeds to a maximum speed with gradual variations in temperature. To cool electronics, systems like the above can be objectionable. Apart from being able to provide only one or at best a few fan speeds, mechanical switching can produce objectionable radio frequency electrical noise.

Thermistors have been used to compensate for variations in temperature and maintain a constant speed of direct current motors where constant speed is important, such as in tape drives. This, however, is quite the opposite of varying the speed of the motor with temperature changes.

According to the present invention there is provided a combination of a fan; a variable speed D.C. motor which drives the fan; a motor energization circuit for supplying said D.C. motor; and a D.C. control circuit for controlling the voltage supplied to said D.C. motor via the energization circuit; characterized in that the D.C. control circuit includes temperature responsive means having an electrical characteristic that varies as a function of temperature, and means electrically connected with the temperature responsive means for varying the D.C. voltage to the motor in response to variations in said electrical characteristic of the temperature response means; whereby the voltage supplied to the D.C. motor of the fan increases as the temperature increases to increase the speed of the fan.

The D.C. control circuit may include a voltage regulator and temperature responsive means, for example a thermistor, to give an output that varies with temperature. The operating characteristics of the supply, and hence the combination supply, fan, and motor, are easily set to accommodate the intended use of the fan by selection of the value of a few circuit elements.

Preferably, the voltage regulator is a commercially available integrated circuit. The few circuit elements chosen to set the operating characteristics are external of the integrated circuit. The thermistor is employed to control the output from the voltage regulator or as a bias adjusting element altering the drive of a transistor that is itself the output varying element. The circuit elements that set operating characteristics can set (a) the minimum temperature, above which fan speed increases, (b) the temperature resulting in maximum fan speed, and (c) the rate of change of speed per increment of temperature change.

The variable output voltage regulators are easy to use, easy to control, inexpensive, and are susceptible of being used in any of several arrangements, none of which need a large or complex circuit. In the least complex arrangement, a thermistor provides one of two resistances controlling the regulator output. Fan speed variation from "off" to maximum speed, or from minimum speed to maximum speed can be selected, which greatly improves the ability to cool electronics. Noise has been minimized or eliminated when normal, low temperatures are experienced. With the fan off or running at a low speed, power consumption is significantly reduced. Yet, should an increase in temperature occur, the fan speed would gradually climb with the temperature until the ambient temperature was under control. Hence, while low speed or off would be commonplace, temperature increases in protected electronics, for example, would be given a higher priority over moderate power consumption and low noise when detected.

In a first circuit arrangement, a variable resistance is the second of the two resistances that control the regulator. It sets the minimum output voltage applied to the motor circuit. The only other output-affecting resistance is the thermistor, so this must be chosen carefully to achieve the correct sensitivity, e.g. voltage change per temperature change.

Slightly more sophisticated arrangements are easily accomplished. In a second circuit arrangement, a transistor is the variable element that controls the output voltage from the regulator and the thermistor varies the base drive to the transistor, to vary the output voltage with temperature. Sensitivity is set by adding a variable resistance, and selection of the thermistor is not quite as critical as in the first circuit. The voltage that is applied across the thermistor to provide transistor base drive is derived from the voltage regulator output. This has a negative feedback effect. An increased output voltage increases the transistor base drive to reduce output voltage. Properly controlled this negative feedback imparts linearity to the voltage/temperature characteristics of the circuit.

Another circuit variation utilizes a Zener diode in series with the aforementioned transistor. These form a series circuit connected to the "adjust" terminal of the integrated voltage regulator circuit. The Zener diode sets a constant minimum output voltage. This is a voltage suitable to drive the D.C. motor at low speed, for example.

A path back to the input to the voltage regulator can be employed to provide a more stable voltage to the thermistor or other regulator controlling circuit elements. The voltage applied to the thermistor, for example, can be wholly or partly independent of the regulated output voltage. This has the advantage of ameliorating or even eliminating, if desired, the negative feedback described above. If the input voltage to the regulator is likely to vary, a second Zener diode can be connected in series with a resistance across the regulator input to provide a stabilized reference voltage that is supplied to the thermistor independent of the output voltage of the voltage regulator.

The present invention will now be described in greater detail by way of example with reference to the accompanying drawings, wherein:

Figure 1 is a schematic circuit diagram of a first embodiment of the integrated circuit voltage regulator D.C. control circuit with thermistor, a D.C. motor and a fan;

Figure 2 is a schematic circuit diagram of a second embodiment wherein the thermistor varies the base drive of a transistor to modify the voltage to the motor; and

Figure 3 is a schematic circuit diagram of a third embodiment, wherein the D.C. supply includes an input Zener diode stabilizing the voltage applied to the thermistor as well as a Zener diode establishing a minimum output voltage.

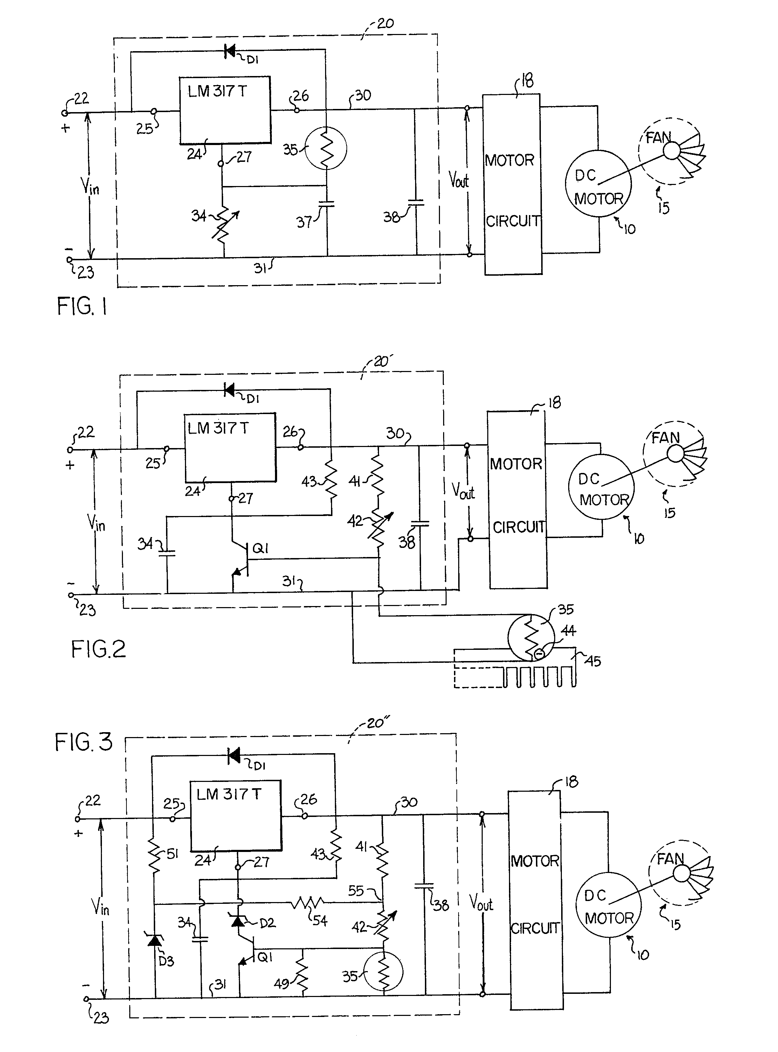

In Figure 1 a D.C. motor 10 drives a fan 15, typically to cool electronics, but useful for any number of other applications. For these purposes, small, permanent magnet, D.C. motors are available. Often these are commutated optically or by Hall devices and the motor circuit 18 is any of the many known energization circuits that provide appropriately timed D.C. energization to the stator windings. Other parameters being fixed, the speed of the D.C. motor 10 in this and each of the following embodiments is dependent on the voltage applied to the motor via the motor circuit 18.

A D.C. supply circuit 20 has positive and negative input terminals 22 and 23 to which is applied a suitable voltage $V_{in}$. An integrated circuit voltage regulator 24, for example Motorola's LM317T, is a three terminal device with an input terminal 25, an output terminal 26, and an adjust terminal 27. The output $V_{out}$ from the supply circuit 20 appears between a positive line 30 and a negative line 31 connected to the negative input terminal 23. This output voltage is the variable output voltage applied to the D.C. motor 10 and its magnitude is controlled by circuit elements connected to the adjust terminal 27 and serving as adjustment circuit means. In this case the adjustment circuit means comprises two resistances. One is a variable resistor 34 connected between the adjust terminal 27 and the line 31. The other is a negative temperature coefficient thermistor 35 connected between the adjust terminal 27 and the positive line 30. Capacitors 37 and 38, in this and each succeeding embodiment, are prescribed protective capacitors preventing harmful resonances, particularly where the lines connecting the integrated circuit LM317T and the next circuit elements are of considerable length. Likewise, the diode $D_1$ is a prescribed protective element to prevent capacitors downstream of the integrated circuit discharging back through the integrated circuit, should the output voltage drop. A typical negative temperature coefficient thermistor is the Keystone thermistor RL 2006-2753-120-D1.

With an appropriate input voltage applied, the integrated circuit voltage regulator 24 develops 1.25 volts between the output terminal 26 and the adjust terminal 27. The total output voltage $V_{out}$ is the sum of this voltage and the voltage drop across the resistor 34. Expressed somewhat differently, this output voltage $V_{out}$ is:

$$V_{out} = V_{ref} (1 + R_2/R_1) + I_{Adj} R_2$$

where:

$V_{ref}$ is the voltage between the positive output terminal and the adjust terminal,

$R_2$ is the resistance of resistor 34,

$R_1$ is the resistance of the thermistor, and

$I_{Adj}$ is the small current that flows from the adjust terminal through the resistance $R_2$, ordinarily negligible.

In Figure 1, the resistance $R_2$ of the resistor 34 is varied to set the minimum output voltage. This may be either sufficient to maintain the motor and fan operating at a low, quiet speed with minimal air movement at low temperatures, or to maintain the fan inactive at those temperatures. The resistance $R_1$ of the thermistor 35, however, sets the sensitivity of the supply 20. That is to say, it determines the rate of change of output voltage per rate of change of temperature. Selection of a thermistor, then, must be done carefully on the basis of the thermistor's characteristics. As will be apparent from the equation for $V_{out}$, output voltage will be extremely sensitive to $R_1$ changes. Although the resistor 34 can be a fixed value, this will result in compromises in circuit performance.

The temperature sensitive element may be other than the negative temperature coefficient thermistor. For

0090514

example, in Figure 1, a positive temperature coefficient thermistor can be used. The circuit locations of the variable resistor and the thermistor will be reversed in that case.

In Figure 2, like numerals designate like elements. An NPN transistor $Q_1$ or its equivalent field effect transistor replaces the resistance between the adjust terminal 27 and the negative reference line 31. Now it is the low temperature collector-emitter voltage of the transistor $Q_1$ that determines the lowest output voltage to maintain the motor and fan operating at low speed or to maintain the motor and fan inoperative. The transistor $Q_1$ also varies the output voltage as its collector-emitter voltage varies. That voltage is controlled by the base drive. A series connection consisting of a fixed resistor 41, a variable resistor 42, and the thermistor 35 provides base drive to the transistor $Q_1$. As shown, the base of the transistor $Q_1$ is connected between the variable resistor 42 and the thermistor 35 so that the varying resistance of the thermistor varies the base drive with temperature. The higher the temperature becomes, the lower the resistance of the thermistor 35. This reduces the voltage on the base of the transistor $Q_1$ reducing conduction therein, and raising the collector-emitter voltage across the transistor. The voltage $V_{out}$ is the sum of this voltage across the transistor and the 1.25 volts from the adjust terminal 27 to the output terminal 26. When the transistor ceases to conduct, the output voltage is maximum, approximately 1.2 volts less than the input voltage $V_{in}$. Resistor 43 provides the resistance $R_1$, as above. Variable resistance 42 is used to set the low temperature minimum output voltage at which the fan is inoperative or at minimum speed. Resistor 41 is protective. It limits current to the thermistor 35 in the event the variable resistor 42 is reduced too dramatically. This protects the transistor $Q_1$ from destruction.

Using the transistor $Q_1$ means that less current need flow through the thermistor than in the embodiment of Figure 1. This eliminates internal heating and improves repeatability. The transistor $Q_1$ serves, as well, as a gain device so that thermistor selection is more easily accomplished using less expensive components. That is to say, the sensitivity can be provided by the transistor $Q_1$ even with a far less sensitive thermistor providing moderate base drive variations. Thermistor selection is, thus, less critical than in Figure 1.

Because the base drive for the transistor $Q_1$ is taken from the output of the integrated circuit, when the thermistor 35 reduces the drive of the transistor $Q_1$ the voltage applied to the thermistor increases. The system thus has a negative feedback aspect that, correctly applied, results in a more linear variation of output voltage with temperature. This too simplifies selection of the thermistor because its ratio coefficient, its change in resistance with temperature, is the main parameter in achieving the desired ratio of low temperature output voltage to high temperature output voltage. In this and the other embodiments of this invention, the negative temperature coefficient thermistors 35 can be mounted remote from the voltage regulator 24 and the fan 15, in close proximity to the heat generating areas of the electronics or of the product to be cooled. This allows remote sensing where temperature changes are most likely to occur or where they are most significant. The thermistor 35 is marked at its negative side as shown at 44 to help prevent shorting out the thermistor when mounting remotely. Typically, for quick response to temperature change, the thermistor can directly contact a heat sink 45, within the electronics to be cooled.

In the circuit of Figure 3, again, like elements bear like reference numerals and the resistors 41, 42 and 43 serve the same purposes. If a resistor 42 is chosen that is suitable for particular circumstances and needs not to be varied, the resistor 41 can be eliminated in both Figures 2 and 3.

In Figure 3 a minimum output voltage that drives the fan at a low and quiet speed is provided by a Zener diode $D_2$ in series with the transistor $Q_1$. Even when, at low temperatures, the thermistor 35 biases the transistor $Q_1$ into full conduction, the Zener voltage plus 1.25 volts will be the output voltage $V_{out}$. This Zener diode $D_2$ can likewise

be used in the circuit of Figure 2 for the same purpose and without the further provisions of Figure 3 to be described below. A resistor 49 in parallel with the thermistor 35 lessens the effect of variations of thermistor resistance with temperature. This too can be used independently in Figure 2.

To reduce or eliminate dependance on the voltage regulator output by the adjustment circuit, the circuit of Figure 3 supplies to the thermistor 35 a voltage derived from the regulator input voltage. Resistor 54 is connected to the thermistor 35 from the input via resistor 51 and variable resistance 42. If $V_{in}$ is stable, the resistor 54 can be connected directly to the high side of the input at terminal 22. However as shown in Figure 3, at the input, the series combination of the resistor 51 and a Zener diode $D_3$ can produce a stabilized voltage at their junction if it is not certain that the fan and circuit will have a stable input voltage available. With the resistor 54 connected directly to the input terminal 22 or to the input Zener diode $D_3$ and resistor 51, as shown, the resistors 41 and 54 will determine the voltage at the junction 55. These resistors thus set the range of base drives provided as the thermistor resistance changes. In this way the resistors 41 and 54 determine the circuit's sensitivity, which is the voltage change per unit of temperature change. Elimination of the resistance 41, leaving no connection from the positive output line 30 to the junction of the resistors 54 and 42 removes negative feedback entirely, providing just the stabilized reference from the input terminal or the Zener diode, and the base drive of the transistor $Q_1$ is then dependent entirely on thermistor resistance variation. This creates a maximum gain or sensitivity, resulting in a maximum $V_{out}$ change for a minimum temperature change. Likewise, the selection of the shunt resistor 49 permits further adjustment of the change in output voltage per change in temperature by modifying the base drive of the transistor $Q_1$ and without selection of a different thermistor.

From the above it will be seen that a control circuit, motor and fan of exceptional versatility are provided. This is particularly attractive where D.C. fan operation is tailored to a user's needs and those needs vary from one user to the next. The temperature at which full speed is reached, the voltage change per unit change in temperature, and the minimum temperature above which the fan speed begins to increase are all easily chosen. Maximum output voltage is limited only by input voltage, within the permissible input voltage range of the chosen integrated circuit voltage regulator. Assuming that the maximum input voltage is not exceeded, the maximum output voltage will be 1.2 volts less than the input voltage, and of course, the input voltage can be chosen as desired using voltages available from the equipment being cooled. In the case of the above-mentioned voltage regulator 24, LM317T, $V_{in}$ can

range up to 37 volts D.C. at 1.5 amps. An alternate regulator, e.g. Texas Instruments TL-783, will permit input voltages in excess of 100V. The integrated circuit is operative between 0°C to 120°C, thus making it suitable for the temperatures contemplated. Internal thermal shutdown, current limiting, and a safe operating area protection are features of the integrated circuit.

CLAIMS

1.    The combination of a fan (15); a variable speed D.C. motor (10) which drives the fan; a motor energization circuit (18) for supplying said D.C. motor; and a D.C. control circuit (20) for controlling the voltage supplied to said D.C. motor via the energization circuit; characterized in that the D.C. control circuit (20) includes temperature reponsive means (35) having an electrical characteristic that varies as a function of temperature, and means (24) electrically connected with the temperature responsive means for varying the D.C. voltage to the motor in response to variations in said electrical characteristic of the temperature responsive means; whereby the voltage supplied to the D.C. motor of the fan increases as the temperature increases to increase the speed of the fan.

2.    The combination according to claim 1, characterized in that the temperature responsive means comprises a thermistor (35) movably connected into the control circuit (20) for location proximate to equipment to be cooled by the fan.

3.    The combination according to claim 2, characterized in that the thermistor (35) is marked (44) to identify the manner of its connection into the control circuit (20), thereby to prevent disabling the thermistor by shorting upon mounting the thermistor proximate said equipment to be cooled by the fan.

4.    The combination according to claim 1, characterized in that the means for varying the D.C. voltage comprises a voltage regulator (24) connected between D.C. input (25) and and input to the D.C. motor, said regulator having an output variable as a function of a parameter of at least one circuit element (34 or $Q_1$) connected thereto, the temperature responsive means (35) comprising means for varying said parameter as a function of temperature.

5.    The combination according to claim 4, characterized in that the temperature responsive means is a thermistor (35) with negative temperature coefficient and is connected to the regulator (24), the regulator being responsive to the resistance of the thermistor to vary the D.C. output as a function of the resistance, and in that an adjustment circuit means is connected with said regulator (24) for controlling the output voltage thereof and includes said circuit element (34 or $Q_1$), the adjustment circuit means including means ($D_2$) for setting the voltage regulator output to a low temperature minimum D.C. voltage corresponding to a fan stopped or minimum fan speed condition.

6.    The combination according to claim 5, characterised in that the adjustment circuit means further comprises a circuit connection (41) to the output of the regulator and providing a negative feedback path to the circuit element to moderate the effect of variations of the temperature responsive means, and in that the circuit element is a transistor $(Q_1)$ connected to the regulator (24), said temperature responsive means comprising means (35) for varying the conduction of said transistor to alter the output voltage of the voltage regulator.

7.      The combination according to claim 6, characterized in that the voltage regulation means comprises an integrated circuit with an input terminal (25) connected to one side of the D.C. input (22), an output terminal (26) coupled to the input of the D.C. motor and an adjustment terminal (27) in circuit with said transistor $(Q_1)$, the temperature responsive means (35) comprising means connected with the transistor $(Q_1)$ for altering the bias thereof to alter the output voltage of the voltage regulator and thereby the speed of the fan.

8.      The combination according to claim 5, characterized in that the means $(D_2)$ in circuit with said circuit $(Q_1)$ element is a Zener diode $(D_2)$ which produces a fixed voltage at the output of said voltage regulator at temperatures at and below a preselected minimum.

9.    The combination according to claim 5, characterized in that means (54) connects said adjustment circuit means to the input to said regulator to provide energization of the adjustment circuit at least partially independently of the output of the voltage regulator, and in that voltage stabilization means ($D_3$) is connected to the input to said regulator (24) and supplies a stabilized reference voltage to said adjustment circuit means via the means (54) connecting the adjustment circuit means to the regulator input.

10.    The combination according to claim 9, characterized in that the voltage stabilization means comprises a Zener diode ($D_3$) connected in circuit with the input (25) to the voltage regulation means (24), said circuit element comprises a transistor ($Q_1$) and the temperature responsive means comprises a thermistor (35), said means connecting the regulator input to the adjustment circuit comprises at least one resistor (54) for supplying the stabilized reference from the Zener diode to the thermistor, and a resistive network (41,51) connecting the output (26) and input (25) of the voltage regulator.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 991 405 (GENERAL MOTORS)<br><br>* Column 1, lines 69-71; figure; column 2, line 1 - column 3, line 32; figure * | 1,2,4, 5 | G 05 D 23/24<br>G 05 F 1/46 |
| A | ELECTRONIC ENGINEERING, vol. 51, no. 622, May 1979, pages 19-21, Chilton Co., Randor, USA<br>R. RADNAI: "Reducing o/p voltage variation of regulator ICs" * Whole document * | 6,7 | |
| A | US-A-4 205 944 (SÜDDEUTSCHE KÜHLERFABRIK JULIUS FR.)<br>* Column 4, lines 31-38; figure 4 * | 1,9 | |
| A | FR-A-2 318 457 (RTC)<br>* Page 9, line 1 - page 10, line 3; figure 3 * | 4 | TECHNICAL FIELDS SEARCHED (Int. Cl. ³)<br><br>G 05 D<br>G 05 F<br>H 02 P |
| A | ELEKTOR, vol. 3, no. 2, February 1977, pages 2-26, 2-30, Canterbury, GB.<br>"IC power supply" * Whole document * | 4 | G 01 K |

The present search report has been drawn up for all claims

| Place of search | Date of completion of the search | Examiner |
|---|---|---|
| THE HAGUE | 20-06-1983 | HOUILLON J.C.P.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82